# EUROPÄISCHE PATENTSCHRIFT

(11) **EP 3 991 942 B1**
(45) Veröffentlichungstag und Bekanntmachung des Hinweises auf die Patenterteilung: **04.03.2026**
(21) Anmeldenummer: 21203315.3
(22) Anmeldetag: 19.10.2021
(51) Int. Cl.: B29C 45/56, F16K 7/12, F16J 3/02, B29C 45/14

(54) **VERFAHREN ZUM HERSTELLEN EINER MEMBRAN FÜR EIN MEMBRANVENTIL**
METHOD FOR PRODUCING A MEMBRANE FOR A MEMBRANE VALVE
PROCÉDÉ DE FABRICATION D'UNE MEMBRANE POUR UNE SOUPAPE À MEMBRANE

(30) Priorität: 03.11.2020 DE 102020128923
(43) Veröffentlichungstag der Anmeldung: 04.05.2022
(73) Patentinhaber: GEMÜ Gebr. Müller Apparatebau GmbH & Co. Kommanditgesellschaft, 74635 Kupferzell (DE)
(72) Erfinder: Haidt, Harald, 74613 Öhringen (DE); Frankenbach, Klaus, 74670 Forchtenberg (DE); Renner, Maximilian, 74861 Neudenau (DE)
(74) Vertreter: DREISS Patentanwälte PartG mbB

(56) Entgegenhaltungen:
- EP-A1- 0 022 009
- EP-A1- 1 518 656
- WO-A1-2020/190133
- JP-A- H03 202 334
- JP-A- H06 234 141
- KR-A- 20190 001 061
- KR-A- 20190 006 281
- "Bildschirmgrafiken der Maschinensteuerung CC200", INTERNET CITATION, 18 September 2003 (2003-09-18), XP002421216, Retrieved from the Internet <URL:http://www.engelglobal.com/at/images/stories/cc200/2---Einzelbewegung.jpg> [retrieved on 20070221]
- GREENER J: "PRODUCING PRECISION PARTS AT INJECTION SPEEDS", PLASTICS ENGINEERING, SOCIETY OF PLASTICS ENGINEERS,INC. GREENWICH, CONN, US, vol. 43, no. 6, 1 June 1987 (1987-06-01), pages 43 - 46, XP001172690, ISSN: 0091-9578

## Beschreibung

Die Erfindung betrifft ein Verfahren zum Herstellen einer Membran für ein Membranventil. PFTE ist ein Werkstoff, der nicht spritzbar ist. Die Verarbeitungsschritte zur Herstellung einer PFTE-Membran für ein Membranventil umfassen ein Pressen eines Pulvers, Sintern des entstandenen Grünlings und Warmumformen (Quenschen). Auf der anderen Seite lassen sich dünnwandige Bauteile durch Spritzgießen mit langen Fließwegen nicht herstellen.

KR 2019 0006281 A offenbart ein Verfahren zur Herstellung von Ventilmembranen.

JP H06 234141 A offenbart ein Spritzgießen von Fluorharz durch Einspritzen von Fluorharz einer bestimmten Schmelzviskosität in eine Form mit hoher Schergeschwindigkeit, so dass das Harz mit dem durchschnittlichen Teilchendurchmesser eines bestimmten Wertes geformt wird, und anschließendes Pressen des Harzes in die gewünschte Form.

Aufgabe der Erfindung ist es deshalb, den aufwendigen Prozess zur Herstellung einer Membran für ein Membranventil zu vereinfachen und gleichzeitig eine Membran für hochreine Prozesse bereitzustellen.

Die der Erfindung zugrundeliegende Aufgabe wird durch ein Verfahren gemäß dem Anspruch 1 gelöst. Vorteilhafte Ausführungsformen und Beispiele der Erfindung finden sich in den Unteransprüchen, der Beschreibung und in der Zeichnung. Ein erster Aspekt der Beschreibung betrifft ein Verfahren zum Herstellen einer Membran für ein Membranventil. Das Verfahren umfasst: Fördern einer Kunststoffschmelze durch wenigstens einen Zuführkanal in ein Formnest, welches von einer ersten Form und einer zweiten Form begrenzt wird; Bewegen der ersten und der zweiten Form aufeinander zu; Entfernen der wenigstens einen Membran aus dem Formnest; und
Abtrennen eines Angusses von der wenigstens einen aus dem Formnest entfernten Membran.

Vorteilhaft vereinfacht das bereitgestellte Verfahren die Fertigung der Membran für das Membranventil. Insbesondere wird ein materialschonendes Herstellverfahren bereitgestellt, dass die Fertigung der dünnwandigen Membran ermöglicht.

Ein vorteilhaftes Beispiel zeichnet sich dadurch aus, dass eine Öffnung des wenigstens einen Zuführkanals benachbart zu einer Stellachse der Membran angeordnet ist oder die Stellachse der Membran durch die Öffnung des wenigstens einen Zuführkanals verläuft.

Vorteilhaft kann von diesem im Wesentlichen mittig angeordneten Anguss die Kavität gleichmäßig gefüllt werden. Die Kunststoffschmelze strömt somit radial in alle Richtungen gleichmäßig in das Formnest ein und beugt so inneren Spannungen der derart gefertigten Membran vor. Im flüssigen Zustand legt die Kunststoffschmelze somit einen kurzen Fließweg nach außen zurück. Insbesondere bei dem Scherempfindlichen PFA hat dies Vorteil.

Ein einem vorteilhaften Beispiel schließt sich eine Öffnung des wenigstens einen Zuführkanals abschnittsweise an eine Schmalseite der herzustellenden Membran an.

Dadurch kann ein Anguss im Bereich der Membran, der später Walkbewegungen ausgesetzt ist vermieden werden.

Ein vorteilhaftes Beispiel zeichnet sich dadurch aus, dass die erste Form mit dem wenigstens einen Zuführkanal eine negative Kontur der Trockenseite der Membran umfasst, und wobei die zweite Form eine negative Kontur der Nassseite der Membran umfasst.

Vorteilhaft wird die Nassseite, also die Seite der Membran, die mit Prozessmedium in Kontakt kommt, ohne Anguss hergestellt. Entsprechend wird die Oberfläche der Nassseite der Membran nicht durch ungewollte Angussreste oder nachbearbeitete Bereiche gestört. Auch eventuell problematische durch den Anguss erzeugte Oberflächenspannungen werden auf der Nassseite vermieden. Ungewollt angelagerte Schmutzpartikel an der Nassseite der Membran können somit vermieden werden. Die Abreinigbarkeit der Nassseite der Membran wird verbessert.

Ein vorteilhaftes Beispiel zeichnet sich dadurch aus, dass das Verfahren umfasst: Einbringen eines Verbindungsabschnitts eines Verbindungspins zur Anbindung an eine Ventilstange in eine zentrale Aussparung der ersten Form, wobei ein Halteabschnitt des Verbindungspins von einer die Aussparung umgebenden Oberfläche der ersten Form und von einer Oberfläche der zweiten Form beabstandet ist.

Vorteilhaft wird der Verbindungspin durch die vorgenannte Beabstandung von beiden Seiten von der Kunststoffschmelze umflossen und damit zu der Membran ausziehsicher festgelegt.

Selbstverständlich ist auch möglich, den Verbindungsabschnitt aus dem Material der Membrane herzustellen. So kann das Material der Membran direkt im Spritzprägeprozess geformt werden. Alternativ kann die Anordnung des Verbindungabschnitts auch durch Anschweißen o.ä. nachträglich durchgeführt werden.

Ein vorteilhaftes Beispiel zeichnet sich dadurch aus, dass die erste Form feststehend angeordnet ist, und wobei die zweite Form zu der ersten Form bewegbar ist.

Vorteilhaft ist beispielsweise der Zuführkanal in der ersten feststehenden Form ausgeführt, womit die gesamte Vorrichtung zur Herstellung der Membran vereinfacht wird.

Ein vorteilhaftes Beispiel zeichnet sich dadurch aus, dass die Kunststoffschmelze wenigstens ein Fluorpolymer, insbesondere ein Perfluoralkoxy-Polymer, PFA, umfasst.

Durch die Verwendung des beschriebenen Verfahrens ist es möglich, mit beispielsweise PFA komplexe und dünne Membrane für Membranventile herstellen. Zum anderen lassen sich hierdurch hochreine Prozessumgebungen realisieren, ohne dass ein ungewünschter von der Membran ausgehender Materialeintrag in das Prozessmedium zu erwarten ist.

Ein vorteilhaftes Beispiel zeichnet sich dadurch aus, dass die Kunststoffschmelze zuschlagstofffrei ist.

Durch die zuschlagstofffreie Ausführung der Membran erweitert sich der Anwendungsbereich der Membran für hochsterile Anwendungen, da unerwünschter Materialeintrag verhindert wird.

Ein zweiter Aspekt der Beschreibung betrifft eine Membran für ein Membranventil, welche mittels des Verfahrens gemäß dem ersten Aspekt hergestellt ist.

In der Zeichnung zeigten:
- Figur 1: eine zweiteilige Membran für ein Membranventil;
- Figuren 2, 4, 5, 7 und 9: jeweils eine Vorrichtung zur Herstellung der Membran in einem schematischen Schnitt;
- Figuren 3 und 6: jeweils ein schematisches Ablaufdiagramm; und
- Figur 8: zwei Membrane in schematischer Draufsicht mit einer bespielhaften Zuführkanalstruktur der Vorrichtung.

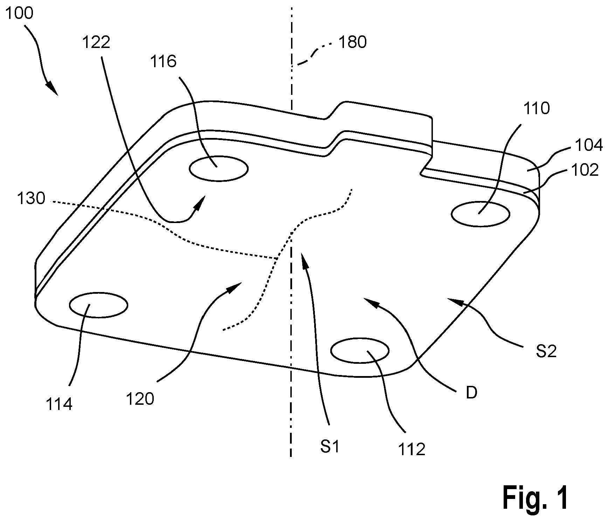

Figur 1 zeigt in perspektivscher Ansicht eine beispielhafte zweiteilige Membran 100 umfassend eine erste, einem Ventilkörper eines Membranventils zugewandte erste Membran 102 und eine zweite, einem Antrieb des Membranventils zugewandte Membran 104. Die zweite Membran 104 ist beispielsweise aus einem Elastomer hergestellt. Durchgangsöffnungen 110-116 dienen beispielsweise zum Durchführen von Befestigungsmitteln wie beispielsweise Stehbolzen. Selbstverständlich sind auch andere Ausführungsformen denkbar, insbesondere Membrane mit einer im Wesentlichen runden Außenkontur und/oder ohne die Durchgangsöffnungen 110-116. Selbstverständlich sind auch einteilige Membrane realisierbar, die beispielsweise nur die erste Membran 102 aufweisen.

Die zweiteilige Membran 100 wird in einem lateralen Bereich zwischen dem Ventilkörper und dem Antrieb verklemmt. Ein Funktionsbereich 120 der zweiteiligen Membran 100 wird auf den Ventilsitz des Ventilkörpers gedrückt, um den von dem Ventilkörper und einer Nassseite 122 der ersten Membran 102 gebildeten Fluidkanal für Prozessfluid zu schließen. Die Bewegung wird durch eine von dem Antrieb entlang einer Stellachse 180 bewegten Antriebsstange verursacht, welche beispielsweise mit einem Druckstück auf die zweiteilige Membran 100 drückt. Hierbei drückt ein in der Figur angedeuteter Dichtsteg 130 der ersten Membran 102 auf den Ventilsitz. Selbstverständlich kann der Dichtsteg in anderen Ausführungsformen auch entfallen. Durch eine Bewegung der Zwei-Komponenten-Membran 100 von dem Ventilsitz weg wird der Fluidkanal geöffnet. Die Membran 102 wird gemäß den nachfolgend beschriebenen Verfahrensschritten hergestellt.

Die Stellachse 180 verläuft beispielsweise lotrecht zu einer gedachten Membranebene im Bereich eines gedachten Mittelpunkts der Membran.

Die Membran 102 umfasst einen statischen, zentralen Bereich S1, der nassseitig zum Schließen des Membranventils auf den Ventilsitz gedrückt wird. Bis auf die Druckbelastungen wird dieser Bereich S1 nicht Wesentlich bewegt.

Die Membran 102 umfasst einen, den zentralen Bereich S1 umschließenden dynamischen Bereich D. Der dynamische Bereich D sorgt durch eine Bewegung dafür, dass der zentrale Bereich S1 vom Ventilsitz abgehoben werden kann und einen Querschnitt zum Fließen des Prozessfluids freigibt. Die Bewegung des dynamischen Bereichs entspricht einer konzentrisch erfolgenden Walkbewegung.

Die Membran 102 umfasst einen den dynamischen Bereich D umschließenden statischen Bereich S2. Die Membran 102 wird in diesem statischen Bereich S2 zwischen zwei Komponenten des Membranventils verspannt und dichtet das Membranventil nach außen ab.

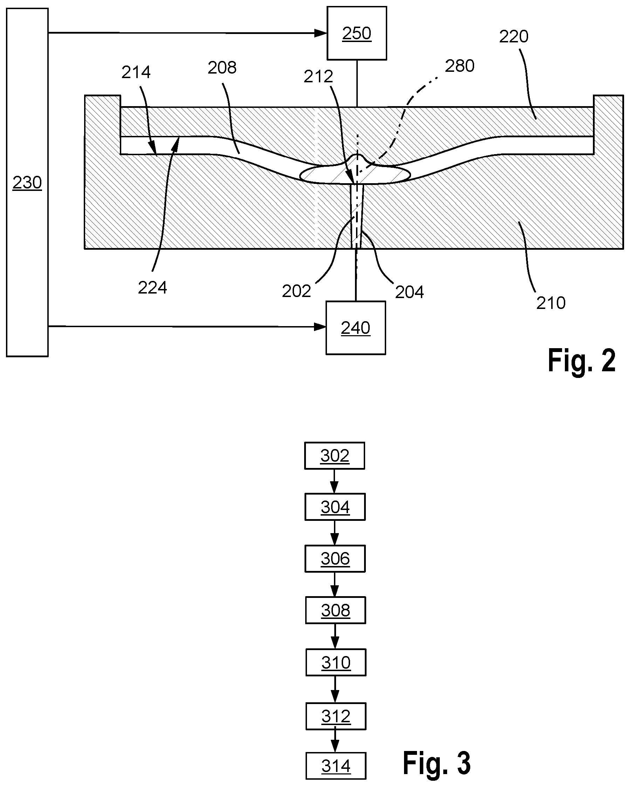

Figur 2 zeigt in einem schematischen Schnitt eine Vorrichtung zum Herstellen der Membran 102 aus Figur 1. Hierzu wird eine Kunststoffschmelze 202 durch wenigstens einen Zuführkanal 204 in ein Formnest 206 geführt. Das Formnest 206 wird von einer ersten Form 210 und einer zweiten Form 220 begrenzt. Die erste Form 210 ist feststehend angeordnet. Die zweite Form 220 ist zu der ersten Form 210 bewegbar angeordnet. Die Stellachse der zu fertigenden Membran verläuft durch die Öffnung 212 des wenigstens einen Zuführkanals 204.

Die erste Form 210 mit dem wenigstens einen Zuführkanal 204 umfasst eine negative Kontur 214 der Trockenseite der Membran 102. Die zweite Form 220 umfasst eine negative Kontur 224 der Nassseite 122 der Membran 102.

In einem anderen Beispiel ist der Zuführkanal 204 der negativen Kontur 224 der Nassseite zugeordnet.

Es ist in der Figur 2 ein Zustand gezeigt, in dem die Kunststoffschmelze 202 aus dem Zuführkanal 204 austritt und sich durch die zentrale Öffnung 212 radial in gleichem Maße in dem Formnest 206 ausbreitet. Erst nach dem gezeigten Zustand wird damit begonnen, dass die erste und die zweite Form 210, 220 aufeinander zu bewegt werden.

Die Kunststoffschmelze 202 umfasst wenigstens ein Fluorpolymer, insbesondere ein Perfluoralkoxy-Polymer, PFA. In einem Beispiel ist die Kunststoffschmelze 202 zuschlagstofffrei und besteht beispielsweise nur als dem Fluorpolymer, insbesondere dem Perfluoralkoxy-Polymer, PFA.

Eine Steuereinheit 230 betreibt eine Plastifiziereinheit 240 und einen Linearantrieb 250 gemäß den hier beschriebenen Verfahrensschritten. Die Plastifiziereinheit 240 ist dazu ausgebildet, den beispielsweise in Pulver oder Pelletform vorliegenden Kunststoff zu plastifizieren und die erzeugte Kunststoffschmelze dem Zuführkanal 204 zuzuführen. Der Linearantrieb 250 ist dazu ausgebildet, die zweite Form 220 entlang einer Stellachse 280, die mit der Stellachse 180 des Membranventils, in dem die Membran später zum Einsatz kommt, übereinstimmt, zu bewegen.

Figur 3 zeigt ein schematisches Ablaufdiagramm. Gemäß einem Schritt 302 sind die erste und die zweite Form 210, 220 in einer ersten Position voneinander entfernt angeordnet. Der Zustand nach dem Durchführen des Schritts 302 ist in der Figur 2 gezeigt. Gemäß einem Schritt 304 wird die Kunststoffschmelze in Richtung der Kavität bzw. dem Formnest 208 gefördert. Die in die Kavität eintretende Schmelze verteilt sich dort. Während die Kunststoffschmelze gefördert wird, wird in einem Schritt 306 damit begonnen, die zweite Form 220 aus der ersten Position heraus in Richtung der ersten Form 210 zu bewegen. In einem Schritt 308 wird die Förderung der Kunststoffschmelze gestoppt, wobei der Druck auf die ausgefüllte Kavität aufrechterhalten wird. In einem Schritt 310 wird die zweite Form 220 von der ersten Form wegbewegt und die Membran wird in einem Schritt 312 mit ihrem Anguss aus dem Formnest entnommen werden. In einem Schritt 314 wird der Anguss, der wenigstens zu einem Teil durch die im Zuführkanal erstarrte Kunststoffschmelze gebildet wird, entfernt. Das Entfernen des Angusses kann durch ein Sägen oder Stanzen entlang einer gedachten Trennebene erfolgen. Nach Durchführen des Schritts 314 ist ein Beschnitt an der Stelle sichtbar, an der der Anguss abgetrennt wurde.

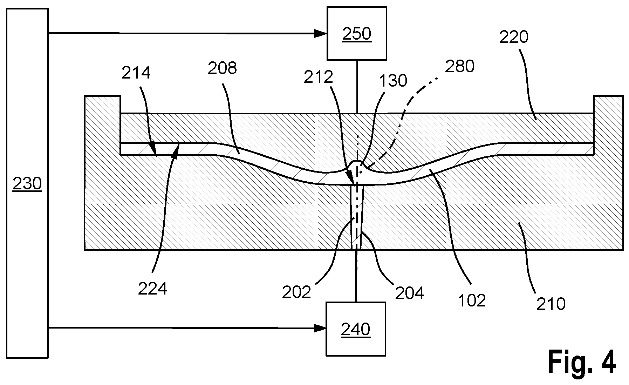

Figur 4 zeigt im Unterschied zu Figur 2 die fertige Membran 102 innerhalb der Vorrichtung. Es ist in der Figur 4 also ein Zustand gezeigt, in dem die erste und die zweite Form 210, 220 aufeinander zu bewegt wurden und die Membran 102 zwischen den Formen 210, 220 verpresst wurde. Entsprechend zeigt die Figur 4 den Zustand vor der Durchführung des Schritts 310 der Figur 3.

In Figur 4 entspricht der Abstand der beiden Formen 210, 220 der Wandstärke der Membran 102. In Figur 2 hingegen beträgt der Abstand der beiden Formhälften 210,220 in etwa das Doppelte der Wandstärke der herzustellenden Membran 102. Es findet also zwischen dem Start der Förderung der Kunststoffschmelze in Richtung des Formnests und dem Ende des Pressvorgangs in etwa eine Halbierung des Volumens des Formnests statt. In weiteren Beispielen kann der Abstand der beiden Formhälften von einer maximalen Öffnung bzw. des maximalen Abstands bei Beginn des Eintritts der Schmelze auf einen minimalen Hub, der zwischen 25% und 75% der maximalen Öffnung beträgt, herabgesetzt werden, wobei der minimale Hub einer Wandstärke der Membran entspricht.

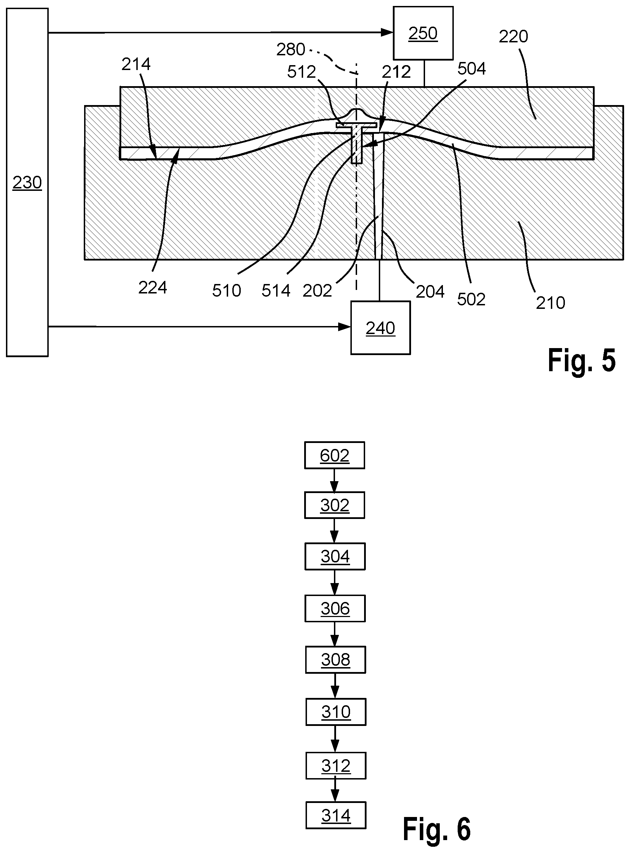

Die Figuren 5 und 6 illustrieren ein weiteres Beispiel für die Fertigung der Membran 502. Im Unterschied zu der Membran 102 aus den vorigen Figuren 1, 2 und 4 umfasst die Membran 502 einen Verbindungspin 510. Des Weiteren ist die Öffnung 212 des wenigstens einen Zuführkanals 204 benachbart zu einer Stellachse 180 der Membran 102 angeordnet. Der Zuführkanal 204 führt also an einer Stelle in das Formnest, welche dem statischen Bereich S1 der Membran 102 gemäß Figur 1 zugeordnet ist. Vorteile ergeben sich z.B. dadurch, dass der Zuführkanal an einer Stelle in das Formnest führt, welche einem der statischen Bereiche S1, S2 der Membran und/oder der Stellachse der Membran zugeordnet ist, so dass an diesem Bereich die Kunststoffschmelze zuerst eintritt, und sich durch Fließen in andere Bereiche ausbreitet. Die Membrane wird in den statischen Bereichen S1 und S2 weniger stark bewegt. Fließlinien und Kanten bilden sich somit nicht in dem zwischen den statischen Bereichen S1 und S2 liegenden beweglichen Bereich der Membran.

Über das Verfahren gemäß der Figur 3 hinausgehend umfasst das Verfahren gemäß der Figur 6 ein Einbringen 602 eines Verbindungsabschnitts 512 eines Verbindungspins 510 zur Anbindung an eine Ventilstange in eine zentrale Aussparung 504 der ersten Form 210, wobei ein Halteabschnitt 514 des Verbindungspins 510 von einer die Aussparung 504 umgebenden Oberfläche der ersten Form 210 und von einer Oberfläche der zweiten Form 220 beabstandet ist.

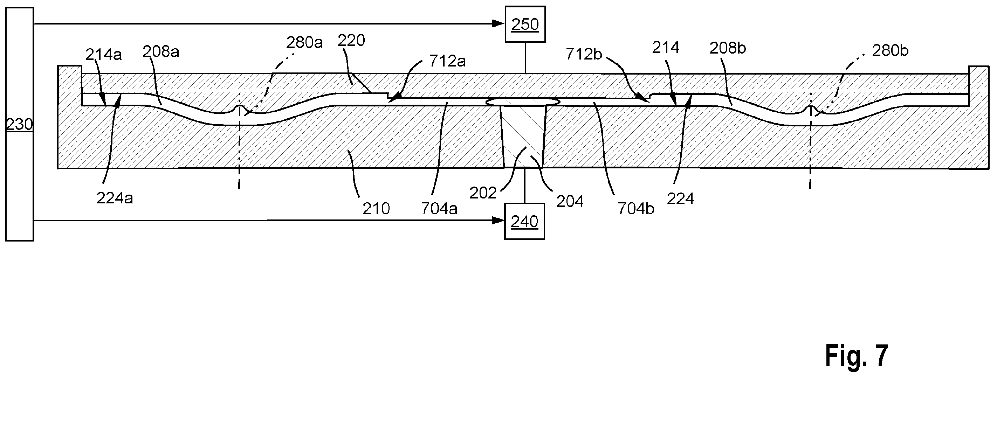

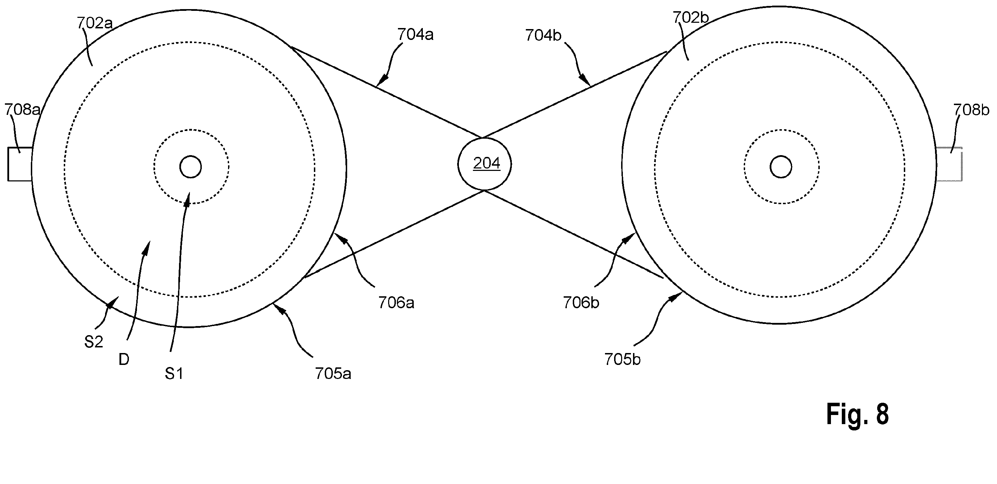

Figuren 7 und 8 illustrieren eine Realisierung des vorab erläuterten Verfahrens mittels eines Filmangusses. So zeigt Figur 7 in einem schematischen Schnitt die Vorrichtung zur Herstellung wenigstens einer Membran 702a, 702b. Für nachfolgend nicht genannte Merkmale wird auf die vorige Beschreibung verwiesen, wobei den Bezugszeichen Indizes 'a' und 'b' angehängt wurden um beispielsweise die beiden Formnester 208a und 208b zu unterscheiden.

Im Unterschied zu den vorigen Beispielen wird die im Wesentlichen kreisrunde Membran 702a, 702b hergestellt. Selbstverständlich sind das nachfolgend skizzierte Verfahren und die zuvor erläuterten Verfahrensschritte auf runde und eckige Außenkonturen der jeweiligen Membran übertragbar.

Im Unterschied zu den zuvor erläuterten Beispielen wird die Kunststoffschmelze 202 über den gemeinsamen Zuführkanal 204 zwischen die beiden Formen 210 und 220 eingebracht. Aus den Zuführkanal 204 herausaustretend wird die Schmelze in wenigstens zwei weitere Zuführkanäle 704a und 704b umgelenkt, deren sich zur Zeichenebene lotrechte Ausdehnung in Richtung der jeweiligen Formnester vergrößert. Die erstarrte Kunststoffschmelze, die sich in dem Zuführkanal 704a, 704b befindet, ist auch als Filmanguss bezeichenbar. Am Ende des jeweiligen Zuführkanals 704, 704b befindet sich eine Öffnung 712a, 712b, die die Grenze zu dem jeweiligen Formnest 208a, 208b darstellt. Die Öffnung 712a, 712b des wenigstens einen Zuführkanals 704a, 704b schließt sich abschnittsweise an eine Schmalseite 705a, 705b der herzustellenden Membran 702a-b an. Der Zuführkanal 704a, 704b führt also an einer Stelle in das Formnest, welche dem statischen Bereich S1 zugeordnet ist. Der Kreisbogen, an den sich die Öffnung 712a, 712b an die Membran 702a, 702b anschließt, hat einen Mittelpunktswinkel zwischen 90° und 20°, insbesondere zwischen 80° und 40°, insbesondere zwischen 70° und 50°. An diesem Kreisbogen befindet sich ein Beschnitt 706a, 706b, der beim Entfernen des Angusses von der Membran 702a, 702b entsteht.

Eine über die Außenkontur der Membrane 702a, 702b herausstehende Lasche 708a, 708b, die beispielsweise zur Anordnung eines elektronischen Datenträgers vorgesehen ist, befindet sich auf der dem Beschnitt 706a, 706b gegenüberliegenden Seite der Membran 702a, 702b.

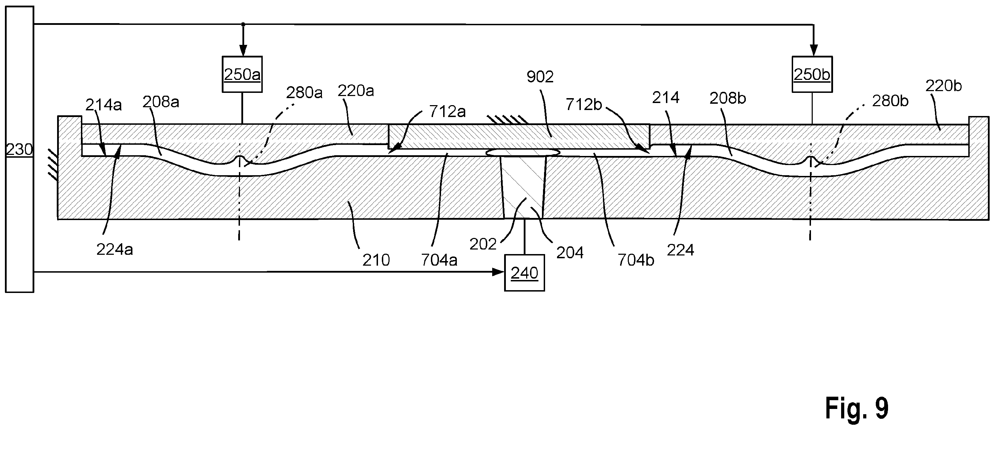

Figur 9 zeigt in einem schematischen Schnitt die Herstellung der wenigstens einen Membran 702a-b mittels des Filmangusses. Für übereinstimmende Merkmale wird auf die Figuren 7 und 8 sowie deren Beschreibung Bezug genommen. Im Unterschied zur Figur 7 sind eine Formhälfte 902 und die Formhälfte 210 feststehend zueinander angeordnet. Formhälften 210a und 210b hingegen sind hingegen wenigstens entlang der Achsen 280a, 280b beweglich.

Die Steuereinheit 230 betreibt eine Plastifiziereinheit 240 und wenigstens einen Linearantrieb 250 bzw. die Linearantriebe 250a und 250b gemäß den hier beschriebenen Verfahrensschritten. Die Linearantriebe 250a und 250b sind dazu ausgebildet, die zugeordnete zweite Form 220a bzw. 220b entlang der jeweiligen Stellachse 280a, 280b, die mit der Stellachse 180 des Membranventils, in dem die Membran später zum Einsatz kommt, übereinstimmt, zu bewegen.

Die Plastifiziereinheit 240 ist dazu ausgebildet, den beispielsweise in Pulver oder Pellet form vorliegenden Kunststoff zu plastifizieren und die erzeugte Kunststoffschmelze dem Zuführkanal 204 zuzuführen.

Im Unterschied zu dem zuvor erläuterten Beispiel der Figuren 7 und 8 trifft die Kunststoffschmelze 202 nach dem Durchfließen des gemeinsamen Zuführkanals 204 auf die zum Zuführkanal 204 feststehende Innenwand der Form 904, deren relative Position zur Form 210 und damit zum gemeinsamen Zuführkanal 204 sich bis zum Entfernen der Membran nicht ändert. Aus den Zuführkanal 202 herausaustretend wird die Schmelze in wenigstens zwei weitere feststehende Zuführkanäle 704a und 704b umgelenkt, deren sich zur Zeichenebene und zu dem Achsen 280a-b lotrechte Ausdehnung in Richtung der jeweiligen Formnester vergrößert. Die Zuführkanäle 704a und 704b werden vorliegend durch eine Form 902 und die Form 210 begrenzt, wobei beide Formen 902 und 210 feststehend zueinander angeordnet sind. Das bedeutet, dass die Zuführkanäle 704a und 704b unabhängig von der Bewegung der Formen 220a und 220b einen konstant bleibenden Innenraum aufweisen, was sich vorteilhaft auf die Fließeigenschaften der Schmelze auswirkt. So ergeben sich geringere Geschwindigkeitsunterschiede und eine damit einhergehende geringere Scherung, was sich vorteilhaft auf die Materialstruktur der hergestellten Membran auswirkt. Die erstarrte Kunststoffschmelze, die sich in dem Zuführkanal 704a, 704b befindet, ist auch als Filmanguss bezeichenbar. Am Ende des jeweiligen Zuführkanals 704, 704b befindet sich die Öffnung 712a, 712b fester Größe, die die Grenze zu dem jeweiligen Formnest 208a, 208b darstellt. Die Öffnung 712a, 712b des wenigstens einen Zuführkanals 704a, 704b schließt sich abschnittsweise an eine Schmalseite 705a, 705b der herzustellenden Membran 702a-b an. Der Zuführkanal 704a, 704b führt also an einer Stelle in das Formnest, welche dem statischen Bereich S1 zugeordnet ist.

Die Zuführkanäle 704a, 704b weisen eine Höhe, also eine Ausbreitung parallel zu einer der Achsen 280a-b, auf, die kleiner ist als die Dicke der herzustellenden Membran. In nicht gezeigter Form können die Zuführkanäle 704a, 704b auch eine gleiche Höhe aufweisen wie die herzustellende Membran.

## Patentansprüche

1. Ein Verfahren zum Herstellen wenigstens einer Membran (102; 502; 702a-b) für ein Membranventil umfassend:
Fördern (304) einer Kunststoffschmelze (202) durch wenigstens einen Zuführkanal (204; 704a; 704b) in ein Formnest (206), welches von einer ersten Form (210) und wenigstens einer zweiten Form (220; 220a, 220b) begrenzt wird;
Bewegen (306), während die Kunststoffschmelze (202) gefördert wird, der ersten und der zweiten Form (210, 220; 220a, 220b) aufeinander zu;
Entfernen (312) der wenigstens einen Membran (102; 502; 702a-b) aus dem Formnest; und
Abtrennen (314) eines Angusses von der wenigstens einen aus dem Formnest entfernten Membran (102; 502; 702a-b).

2. Das Verfahren gemäß dem Anspruch 1, wobei die Membran (102; 502; 702a-b) einen statischen, zentralen Bereich (S1), einen, den zentralen Bereich (S1) umschließenden dynamischen Bereich (D), und einen den dynamischen Bereich (D) umschließenden statischen Bereich (S2) umfasst, und wobei der Zuführkanal (204; 704a; 704b) an einer Stelle in das Formnest führt, welche einem der statischen Bereiche (S1, S2) zugeordnet ist.

3. Das Verfahren gemäß dem Anspruch 1 oder 2, wobei eine Öffnung (212) des wenigstens einen Zuführkanals (204) benachbart zu einer Stellachse (180) der herzustellenden Membran (102) angeordnet ist oder die Stellachse (180) der herzustellenden Membran (102) durch die Öffnung (212) des wenigstens einen Zuführkanals (204) verläuft.

4. Das Verfahren gemäß dem Anspruch 1 oder 2, wobei eine Öffnung (712a; 712b) des wenigstens einen Zuführkanals (704a; 704b) sich abschnittsweise an eine Schmalseite (705a; 705b) der herzustellenden Membran (102; 502; 702a-b) anschließt.

5. Das Verfahren gemäß einem der vorigen Ansprüche, wobei die erste Form (210) mit dem wenigstens einen Zuführkanal (204) eine negative Kontur (214) der Trockenseite der Membran (102) umfasst, und wobei die wenigstens eine zweite Form (220; 220a, 220b) eine negative Kontur (224) der Nassseite (122) der Membran (102) umfasst.

6. Das Verfahren gemäß einem der vorigen Ansprüche umfassend:
Einbringen (602) eines Verbindungsabschnitts (512) eines Verbindungspins (510) zur Anbindung an eine Ventilstange in eine zentrale Aussparung (504) der ersten Form (210), wobei ein Halteabschnitt (514) des Verbindungspins (510) von einer die Aussparung (504) umgebenden Oberfläche der ersten Form (210) und von einer Oberfläche der wenigstens einen zweiten Form (220; 220a, 220b) beabstandet ist.

7. Das Verfahren gemäß einem der vorigen Ansprüche, wobei die erste Form (210) feststehend angeordnet ist, und wobei die wenigstens eine zweite Form (220; 220a, 220b) zu der ersten Form (210) bewegbar ist.

8. Das Verfahren gemäß einem der vorigen Ansprüche, wobei ein Innenvolumen des wenigstens einen Zuführkanals (204; 704a; 704b) zwischen dem Fördern (304) und einem Entfernen der wenigstens einen zweiten Form (220) gleichbleibt.

9. Das Verfahren gemäß einem der vorigen Ansprüche, wobei zwischen wenigstens zwei zweiten beweglichen Formen (220a, 220b) eine feststehende Form (902) angeordnet ist, welche wenigstens abschnittsweise einen in das Formnest mündenden Zuführkanal (704a; 704b) begrenzt.

10. Das Verfahren gemäß einem der Ansprüche 1 bis 7, wobei ein Innenvolumen des wenigstens einen Zuführkanals (204; 704a; 704b) zwischen dem Fördern (304) und einem Entfernen der wenigstens einen zweiten Form (220) sich verkleinert.

11. Das Verfahren gemäß einem der vorigen Ansprüche, wobei die Kunststoffschmelze (202) wenigstens ein Fluorpolymer, insbesondere ein Perfluoralkoxy-Polymer, PFA, umfasst.

12. Das Verfahren gemäß einem der vorigen Ansprüche, wobei die Kunststoffschmelze (202) zuschlagstofffrei ist.

## Claims

1. A method for producing at least one diaphragm (102; 502; 702a-b) for a diaphragm valve, the method comprising:
conveying (304) a plastics melt (202) through at least one feed channel (204; 704a; 704b) into a mold cavity (206) which is delimited by a first mold (210) and at least one second mold (220; 220a, 220b);
moving (306) the first and the second mold (210, 220; 220a, 220b) toward each other while the plastics melt (202) is being conveyed;
removing (312) the at least one diaphragm (102; 502; 702a-b) from the mold cavity; and
severing (314) a sprue from the at least one diaphragm (102; 502; 702a-b) removed from the mold cavity.

2. The method according to claim 1, wherein the diaphragm (102; 502; 702a-b) comprises a static central region (S1), a dynamic region (D) enclosing the central region (S1), and a static region (S2) enclosing the dynamic region (D), and wherein the feed channel (204; 704a; 704b) leads into the mold cavity at a point which is assigned to one of the static regions (S1, S2).

3. The method according to claim 1 or 2, wherein an opening (212) of the at least one feed channel (204) is arranged adjacent to an adjustment axis (180) of the diaphragm (102) to be produced, or the adjustment axis (180) of the diaphragm (102) to be produced passes through the opening (212) of the at least one feed channel (204).

4. The method according to claim 1 or 2, wherein an opening (712a; 712b) of the at least one feed channel (704a; 704b) adjoins, in portions, a narrow side (705a; 705b) of the diaphragm (102; 502; 702a-b) to be produced.

5. The method according to any of the preceding claims, wherein the first mold (210) with the at least one feed channel (204) has a negative contour (214) of the dry side of the diaphragm (102), and wherein the at least one second mold (220; 220a, 220b) has a negative contour (224) of the wet side (122) of the diaphragm (102).

6. The method according to any of the preceding claims, comprising:
introducing (602) a connecting portion (512) of a connecting pin (510) for connection to a valve rod into a central recess (504) of the first mold (210), wherein a holding portion (514) of the connecting pin (510) is spaced apart from a surface of the first mold (210) surrounding the recess (504) and from a surface of the at least one second mold (220; 220a, 220b).

7. The method according to any of the preceding claims, wherein the first mold (210) is arranged so as to be stationary, and wherein the at least one second mold (220; 220a, 220b) is movable with respect to the first mold (210).

8. The method according to any of the preceding claims, wherein an internal volume of the at least one feed channel (204; 704a; 704b) remains constant between the conveying step (304) and a step of removing the at least one second mold (220).

9. The method according to any of the preceding claims, wherein a stationary mold (902) is arranged between at least two second mobile molds (220a, 220b), which stationary mold at least in portions delimits a feed channel (704a; 704b) opening into the mold cavity.

10. The method according to any of claims 1 to 7, wherein an internal volume of the at least one feed channel (204; 704a; 704b) decreases between the conveying step (304) and a step of removing the at least one second mold (220).

11. The method according to any of the preceding claims, wherein the plastics melt (202) comprises at least one fluoropolymer, in particular a perfluoroalkoxy polymer, PFA.

12. The method according to any of the preceding claims, wherein the plastics melt (202) is free of additives.

## Revendications

1. Procédé de fabrication d'au moins une membrane (102; 502; 702a-b) pour une vanne à membrane, comprenant:
transporter (304) une masse fondue de matière plastique (202) à travers au moins un canal d'alimentation (204; 704a; 704b) dans une cavité de moule (206) qui est délimitée par un premier moule (210) et au moins un deuxième moule (220; 220a, 220b);
rapprocher (306) les premier et deuxième moules (210, 220; 220a, 220b) pendant le transport de la masse fondue de matière plastique (202);
retirer (312) ladite au moins une membrane (102; 502; 702a-b) de la cavité de moule; et
séparer (314) une carotte de ladite au moins une membrane (102; 502; 702a-b) retirée de la cavité de moule.

2. Procédé selon la revendication 1, dans lequel la membrane (102; 502; 702a-b) comprend une zone centrale statique (S1), une zone dynamique (D) entourant la zone centrale (S1) et une zone statique (S2) entourant la zone dynamique (D), et dans lequel le canal d'alimentation (204; 704a; 704b) débouche dans la cavité de moule sur un point qui est associé à l'une des zones statiques (S1, S2).

3. Procédé selon la revendication 1 ou 2, dans lequel une ouverture (212) dudit au moins un canal d'alimentation (204) est disposée à proximité d'un axe de réglage (180) de la membrane (102) à produire, ou l'axe de réglage (180) de la membrane (102) à produire s'étend à travers l'ouverture (212) dudit au moins un canal d'alimentation (204).

4. Procédé selon la revendication 1 ou 2, dans lequel une ouverture (712a; 712b) dudit au moins un canal d'alimentation (704a; 704b) est adjacente par sections à un côté étroit (705a; 705b) de la membrane (102; 502; 702a-b) à produire.

5. Procédé selon l'une quelconque des revendications précédentes, dans lequel le premier moule (210) comprenant ledit au moins un canal d'alimentation (204) présente un contour négatif (214) de la face sèche de la membrane (102), et dans lequel ledit au moins un deuxième moule (220; 220a, 220b) comprend un contour négatif (224) de la face humide (122) de la membrane (102).

6. Procédé selon l'une quelconque des revendications précédentes, comprenant:
introduire (602) une section de connexion (512) d'une broche de connexion (510) destinée à être raccordée à une tige de vanne dans un évidement central (504) du premier moule (210), dans lequel une section de retenue (514) de la broche de connexion (510) est espacée d'une surface du premier moule (210), qui entoure l'évidement (504), et d'une surface dudit au moins un deuxième moule (220; 220a, 220b).

7. Procédé selon l'une quelconque des revendications précédentes, dans lequel le premier moule (210) est disposé de manière fixe et dans lequel ledit au moins un deuxième moule (220; 220a, 220b) est mobile par rapport au premier moule (210).

8. Procédé selon l'une quelconque des revendications précédentes, dans lequel un volume interne dudit au moins un canal d'alimentation (204; 704a; 704b) reste identique entre le transport (304) et un retrait dudit au moins un deuxième moule (220).

9. Procédé selon l'une quelconque des revendications précédentes, dans lequel un moule fixe (902) est disposé entre au moins deux deuxièmes moules mobiles (220a, 220b), qui définit au moins par sections un canal d'alimentation (704a; 704b) s'ouvrant dans la cavité de moule.

10. Procédé selon l'une quelconque des revendications 1 à 7, dans lequel un volume interne dudit au moins un canal d'alimentation (204; 704a; 704b) diminue entre le transport (304) et un retrait dudit au moins un deuxième moule (220).

11. Procédé selon l'une quelconque des revendications précédentes, dans lequel la masse fondue de matière plastique (202) comprend au moins un fluoropolymère, en particulier un polymère perfluoroalcoxy, PFA.

12. Procédé selon l'une quelconque des revendications précédentes, dans lequel la masse fondue de matière plastique (202) est exempte d'additifs.
